(19) Europäisches Patentamt
European Patent Office
Office européen des brevets

(11) EP 4 628 316 A1

(12) EUROPEAN PATENT APPLICATION
published in accordance with Art. 153(4) EPC

(43) Date of publication:
**08.10.2025 Bulletin 2025/41**

(21) Application number: **23897741.7**

(22) Date of filing: **27.11.2023**

(51) International Patent Classification (IPC):
***B41M 5/00*** *(2006.01)* ***B41J 2/01*** *(2006.01)*
***C09D 11/322*** *(2014.01)*

(52) Cooperative Patent Classification (CPC):
**B41J 2/01; B41M 5/00; C09D 11/322**

(86) International application number:
**PCT/JP2023/042418**

(87) International publication number:
**WO 2024/117093 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.11.2022 JP 2022189591**

(71) Applicant: **FUJIFILM Corporation**
**Tokyo 106-8620 (JP)**

(72) Inventors:
- **SHIMOYAMA, Tatsuya**
  **Ashigarakami-gun, Kanagawa 258-8577 (JP)**
- **SHINOHARA, Ryuji**
  **Ashigarakami-gun, Kanagawa 258-8577 (JP)**
- **KARIYA, Toshihiro**
  **Ashigarakami-gun, Kanagawa 258-8577 (JP)**
- **HONGO, Yushi**
  **Ashigarakami-gun, Kanagawa 258-8577 (JP)**

(74) Representative: **Klunker IP Patentanwälte PartG mbB**
**Destouchesstraße 68**
**80796 München (DE)**

# (54) INKJET RECORDING METHOD AND INKJET RECORDING DEVICE

(57) Provided is an ink jet recording method including: applying ink; and heating and drying the ink, in which the heating and drying of the ink is performed using a heating drying device, the heating drying device includes a heating roller and a guide roller configured to come into contact with the ink applied to a recording medium and to guide the recording medium such that an ink non-applied surface in the recording medium comes into contact with the heating roller, the ink contains water, a pigment, a pigment dispersing resin, and an acrylic resin as a resin other than the pigment dispersing resin, and a product of an acid value A mgKOH/g of the acrylic resin and a kinetic friction coefficient B of an outer peripheral surface of the guide roller is 1.0 to 5.0.

FIG. 1

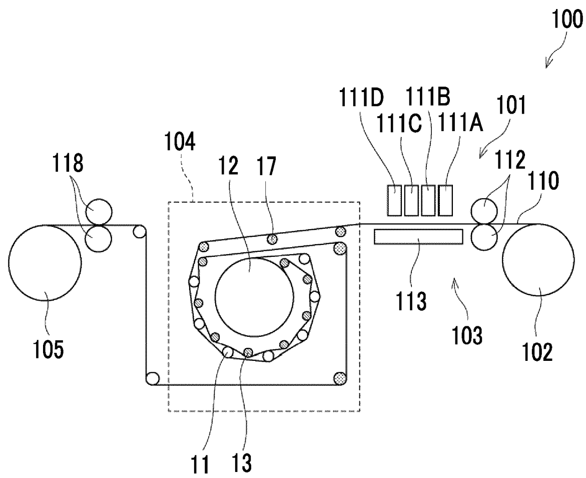


EP 4 628 316 A1

## Description

BACKGROUND OF THE INVENTION

1. Field of the Invention

The present disclosure relates to an ink jet recording method and an ink jet recording device.

2. Description of the Related Art

In the related art, various investigations have been conducted on the ink jet recording method.
For example, as a drying device that can be used for drying ink in the ink jet recording method and can reduce a drying time, JP2020-16355A discloses a drying device that dries a drying target object transported with liquid applied on the drying target object, the drying device including: one or a plurality of first heating members configured to heat the drying target object; and one or a plurality of second heating members configured to heat the drying target object heated by the first heating members, in which the one or the plurality of first heating members include a first heating member configured to heat the drying target object to a higher heating temperature than a heating temperature of the second heating members. JP2020-16355A discloses that the drying device includes at least one guide roller configured to come into contact with a liquid applied surface of the drying target object to which the liquid is applied and to guide the drying target object.
In addition, JP2022-037537A discloses a printing apparatus including: a printing unit configured to attach ink to an elongated printing surface of a print medium that is being transported; and a drying mechanism configured to dry the ink by heating the print medium unloaded from the printing unit, in which the drying mechanism includes at least first to fourth turning rollers each configured to come into contact with a back surface with no ink attached in the print medium unloaded from the printing unit to change a transport direction of the print medium, a printing surface contact roller disposed downstream of the fourth turning roller in the transport direction and configured to come into contact with the printing surface of the print medium to turn the transport direction of the print medium, and at least first to third heating units each configured to heat the print medium guided by the first to fourth turning rollers and the printing surface contact roller.

SUMMARY OF THE INVENTION

However, in the ink jet recording, in a case where the heating drying device (for example, the drying device described in JP2020-16355A and the drying mechanism described in JP2022-037537A) including the guide roller configured to come into contact with the ink applied to the recording medium is used, image defects may occur. On the other hand, in a case where an attempt to suppress image defects using a component in the ink is made, jettability from an ink jet head may decrease.
An object of one aspect of the present disclosure is to provide an ink jet recording method and an ink jet recording device that can suppress image defects and can suppress a decrease in the jettability of ink.
The present disclosure includes the following aspects.

<1> An ink jet recording method comprising:

applying ink to a recording medium using an ink jet method; and
heating and drying the ink applied to the recording medium while transporting the recording medium to which the ink is applied,
in which the heating and drying is performed using a heating drying device including

a heating roller configured to come into contact with an ink non-applied surface in the recording medium to which the ink is applied and to heat the ink applied to the recording medium through the recording medium and
a guide roller configured to come into contact with an ink-applied surface in the recording medium to which the ink is applied and to guide the recording medium to which the ink is applied,

the ink contains water, a pigment, a pigment dispersing resin, and an acrylic resin as a binder resin, and
in a case where an acid value of the acrylic resin in units of mgKOH/g is represented by A and a kinetic friction coefficient of an outer peripheral surface of the guide roller is represented by B, a product of A and B is 1.0 to 5.0.

<2> The ink jet recording method according to <1>,
in which the acid value of the acrylic resin is 20 mgKOH/g to 80 mgKOH/g.

<3> The ink jet recording method according to <1> or <2>,
in which in a case where the acid value of the acrylic resin in units of mgKOH/g is represented by A and a drying temperature of the ink in the heating and drying in units of °C is represented by T1, an A/T1 ratio is 0.50 or less.
<4> The ink jet recording method according to any one <1> to <3>,
in which in a case where a glass transition temperature of the acrylic resin in units of °C is represented by T2 and the kinetic friction coefficient of the outer peripheral surface of the guide roller is represented by B, a T2/B ratio is 1000 or more.
<5> The ink jet recording method according to any one of <1> to <4>,
in which in a case where a weight-average molecular weight of the acrylic resin is represented by C and the kinetic friction coefficient of the outer peripheral surface of the guide roller is represented by B, a value obtained by dividing a C/B ratio by 1000 is 100 or more.
<6> The ink jet recording method according to any one of <1> to <5>,
in which in a case where a glass transition temperature of the acrylic resin in units of °C is represented by T2 and a drying temperature of the ink in the heating and drying in units of °C is represented by T1, an absolute value of a difference between T2 and T1 is 60 or less.
<7> The ink jet recording method according to any one of <1> to <6>,
in which the guide roller includes a surface layer containing a fluororesin.
<8> The ink jet recording method according to any one of <1> to <7>,
in which the kinetic friction coefficient of the outer peripheral surface of the guide roller is 0.03 to 0.08.
<9> The ink jet recording method according to any one of <1> to <8>,
in which an arithmetic average roughness Ra of the outer peripheral surface of the guide roller defined according to JIS B0601:2013 is 2 μm to 8 μm.
<10> The ink jet recording method according to any one of <1> to <9>,
in which a glass transition temperature of the acrylic resin in units of °C is 50°C or higher.
<11> The ink jet recording method according to any one of <1> to <10>,
in which a weight-average molecular weight of the acrylic resin is 5000 to 150000.
<12> The ink jet recording method according to any one of <1> to <11>,
in which the acrylic resin contains a structural unit derived from styrene.
<13> The ink jet recording method according to any one of <1> to <12>,
in which the acrylic resin is a water-soluble resin.
<14> The ink jet recording method according to any one of <1> to <13>,
in which the ink further contains a silicone-based surfactant.
<15> The ink jet recording method according to any one of <1> to <14>,

in which the heating drying device includes
a plurality of heating rollers, and
further includes, as a transport path through which the recording medium to which the ink is applied is transported,

a first transport path through which the recording medium to which the ink is applied is transported while being in contact with the plurality of heating rollers, and
a second transport path through which the recording medium having passed through the first transport path is transported while being guided by the guide roller to be in contact again with at least one of the plurality of heating rollers in contact with the first transport path.

<16> An ink jet recording device used for the ink jet recording method according to any one of <1> to <15>, the ink jet recording device comprising:

an ink jet head configured to apply the ink to the recording medium; and
the heating drying device.

According to an aspect of the present disclosure, it is possible to provide an ink jet recording method and an ink jet recording device that can suppress image defects and a decrease in the jettability of ink.

BRIEF DESCRIPTION OF THE DRAWINGS

Fig. 1 is a view conceptually showing an example of an ink jet recording device used for an ink jet recording method

according to the present disclosure.

Fig. 2 is an enlarged view showing a heating drying device in the ink jet recording device according to the example shown in Fig. 1.

DESCRIPTION OF THE PREFERRED EMBODIMENTS

In the present specification, a numerical range indicated using "to" means a range including numerical values described before and after "to" as a minimum value and a maximum value, respectively.

In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.

In the present specification, in a case where a plurality of substances corresponding to each component in a composition is present, the amount of each component in the composition means the total amount of the plurality of substances present in the composition, unless otherwise specified.

In the present specification, a combination of two or more preferable aspects is a more preferable aspect.

In the present specification, the meaning of the term "step" includes not only an independent step but also a step whose intended purpose is achieved even in a case in which the step is not clearly distinguished from other steps.

In the present specification, "image" means general films, and "image recording" means formation of the image (that is, the film). In addition, the concept of "image" in the present specification also includes a solid image.

In the present specification, a concept of "(meth)acrylate" includes both acrylate and methacrylate, and a concept of "(meth)acrylic acid" includes both acrylic acid and methacrylic acid.

[Ink Jet Recording Method]

An ink jet recording method according to the present disclosure (hereinafter, also simply referred to as "recording method") comprises:

applying ink to a recording medium using an ink jet method; and

heating and drying the ink applied to the recording medium while transporting the recording medium to which the ink is applied,

in which the heating and drying is performed using a heating drying device including

a heating roller configured to come into contact with an ink non-applied surface (that is, a surface opposite to a surface to which the ink is applied) in the recording medium to which the ink is applied and to heat the ink applied to the recording medium through the recording medium and

a guide roller configured to come into contact with an ink-applied surface (the surface to which the ink is applied) in the recording medium to which the ink is applied and to guide the recording medium to which the ink is applied, the ink contains water, a pigment, a pigment dispersing resin, and an acrylic resin as a binder resin (hereinafter, also simply referred to as "the acrylic resin"), and

in a case where an acid value of the acrylic resin in units of mgKOH/g is represented by A and a kinetic friction coefficient of an outer peripheral surface of the guide roller is represented by B, a product of A and B is 1.0 to 5.0.

The recording method according to the present disclosure is the recording method including the heating drying device that includes the guide roller, in which an image where image defects are suppressed can be recorded, and a decrease in the jettability of ink from an ink jet head can be suppressed.

This effect is considered to be obtained by the configuration where the product of A and B is in a range of 1.0 to 5.0. Hereinafter, the mechanism for obtaining the effect will be described.

It is considered that, in a case where A that is the acid value of the acrylic resin excessively increases, the remaining moisture content in the process of drying the ink increases, the scratch resistance of the ink in a state where the drying is insufficient decreases, and thus image defects caused by contact between the ink on the recording medium and the guide roller are likely to occur. It is considered that, by reducing A, image defects are suppressed.

On the other hand, it is considered that, in a case where A that is the acid value of the acrylic resin excessively decreases, the re-solubility of the acrylic resin in the ink is insufficient, and thus a coating or a precipitate of the ink remains in the vicinity of a nozzle of an ink jet head such that the jettability of the ink decreases. It is considered that, by increasing A, a decrease in the jettability of the ink is suppressed.

In addition, it is considered that, in a case where the kinetic friction coefficient B of the outer peripheral surface of the guide roller excessively increases, image defects caused by contact between the ink on the recording medium and the

guide roller are likely to occur. It is considered that, by reducing B, image defects are suppressed.

In consideration of the above-described points, in the recording method according to the present disclosure, the product of A and B (that is, A × B) is limited to a range of 1.0 to 5.0.

By adjusting the product of A and B to be 1.0 or more, a decrease in the jettability of the ink is suppressed.

By adjusting the product of A and B to be 5.0 or less, image defects are suppressed.

<Heating Drying Device X>

A heating drying device (hereinafter, also referred to as "heating drying device X") used for the recording method according to the present disclosure includes

a heating roller configured to come into contact with an ink non-applied surface in the recording medium to which the ink is applied and to heat the ink applied to the recording medium through the recording medium, and
a guide roller configured to come into contact with an ink-applied surface in the recording medium to which the ink is applied and to guide the recording medium to which the ink is applied.

As described above, in general, in the recording method using the heating drying device X, image defects caused by the guide roller that comes into contact with the ink-applied surface may occur.

Regarding this point, by adjusting the product of A and B to be 5.0 or less, although the recording method according to the present disclosure is the recording method using the heating drying device X, image defects are suppressed.

Examples of the heating drying device X include the following heating drying device X1.

The heating drying device X1 includes

a plurality of heating rollers, and
further includes, as a transport path through which the recording medium to which the ink is applied is transported, a first transport path through which the recording medium to which the ink is applied is transported while being in contact with the plurality of heating rollers, and
a second transport path through which the recording medium having passed through the first transport path is transported while being guided by the guide roller to be in contact again with at least one of the plurality of heating rollers in contact with the first transport path.

The heating drying device X1 includes the second transport path through which the recording medium is transported while being in contact again with at least one of the plurality of heating rollers in contact with the first transport path such that the heating and drying of the ink can be efficiently performed.

Accordingly, the heating drying device X1 is advantageous in, for example, reducing the size of the heating drying device and reducing the heating and drying time (for example, increasing the transportation speed).

A specific example of the heating drying device X will be described below in detail (refer to Fig. 2).

<Guide Roller>

The heating drying device X includes a guide roller configured to come into contact with an ink-applied surface in the recording medium to which the ink is applied and to guide the recording medium to which the ink is applied.

In the present disclosure, the kinetic friction coefficient of the outer peripheral surface of the guide roller represented by "B" (hereinafter, also referred to as "the kinetic friction coefficient (B)") is preferably 0.03 to 0.22, more preferably 0.03 to 0.13, and still more preferably 0.03 to 0.08.

The kinetic friction coefficient (B) of the outer peripheral surface of the guide roller according to the present disclosure refers to a value measured using the following method.

Using a urethane rubber ball indenter having an outer diameter of 3/8 inch and a rubber hardness of 90 degrees as a measurement indenter, a frictional force (gf) of the outer peripheral surface of the guide roller is measured under conditions of a test load of 50 gf, a speed of 10 mm/sec, and a measurement distance of 50 mm. The average value of frictional force (gf) measured in a period between the time of 0.4 seconds from the measurement start and the time of 1.0 second from the measurement start is obtained. The obtained average value (gf) of frictional force is divided by the test load (gf) to obtain a value as the kinetic friction coefficient of the outer peripheral surface of the guide roller.

In Examples described below, the above-described measurement was performed using a surface property tester ("HEIDON 14FW", manufactured by Shinto Scientific Co., Ltd.).

It is preferable that the guide roller includes a surface layer containing a fluororesin.

As a result, the kinetic friction coefficient (B) is likely to be reduced. Therefore, the configuration in which the

product of A and B is 5.0 or less is more likely to be achieved.

Examples of the fluororesin include

tetrafluoroethylene-perfluoroalkyl vinyl ether copolymer (PFA),
polytetrafluoroethylene (PTFE),
tetrafluoroethylene-hexafluoropropylene copolymer (FEP),
ethylene-tetrafluoroethylene copolymer (ETFE),
polyvinylidene fluoride (PVDF),
polychlorotrifluoroethylene (PCTFE), and
tetrafluoroethylene-hexafluoropropylene-perfluoroalkyl vinyl ether copolymer (EPE).

The fluororesin in the surface layer may be used alone or in combination of two or more kinds.

It is preferable that the fluororesin in the surface layer contains PTFE.

In a case where the guide roller includes the surface layer containing a fluororesin, a core of the guide roller is not particularly limited.

Examples of the core include aluminum, an aluminum alloy, and stainless steel.

The surface layer in the fluororesin can be formed, for example, by applying a primer material to the core, applying (coating) the fluororesin to the primer material, and performing a heat treatment for calcination.

In addition, the guide roller in the surface layer containing the fluororesin can be formed by covering the core with a heat-shrinkable fluororesin tube and heat-shrinking the heat-shrinkable fluororesin tube with hot air.

The layer thickness of the surface layer containing the fluororesin is, for example, 100 μm or more, preferably 100 μm to 1000 μm, and more preferably 100 μm to 500 μm.

In the outer peripheral surface of the guide roller, the arithmetic average roughness Ra (hereinafter, also simply referred to as "Ra" or "the surface roughness Ra") defined according to JIS B0601:2013 is preferably 2 μm to 15 μm and more preferably 2 μm to 8 μm.

In a case where Ra of the outer peripheral surface of the guide roller is 15 μm or less, the kinetic friction coefficient (B) is likely to be reduced. Therefore, the configuration in which the product of A and B is 5.0 or less is more likely to be achieved.

In a case where Ra of the outer peripheral surface of the guide roller is 2 μm or more, the manufacturing suitability of the guide roller is excellent.

Here, in a case where the guide roller includes the above-described surface layer, the outer peripheral surface of the guide roller refers to a surface of the surface layer.

<Heating Roller>

The heating drying device X includes a heating roller configured to come into contact with an ink non-applied surface in the recording medium to which the ink is applied and to heat the ink applied to the recording medium through the recording medium.

The heating roller is not particularly limited, and a well-known heating roller can be used.

Examples of the well-known heating roller include a heating roller including a roller main body formed of metal and a heat source (for example, a halogen lamp) built in the roller main body.

Examples of the metal that is the material of the roller main body include aluminum, an aluminum alloy, and stainless steel.

The heating roller may refer to, for example, JP2020-16355A (paragraphs 0032 to 0037, Fig. 3).

<Heating Drum>

The heating drying device X may include a heating drum configured to come into contact with an ink non-applied surface in the recording medium to which the ink is applied and to heat the ink applied to the recording medium through the recording medium.

For example, the heating drying device X1 may further include, between the first transport path and the second transport path, a heating drum configured to come into contact with an ink non-applied surface in the recording medium to which the ink is applied and to heat the ink applied to the recording medium through the recording medium.

As a result, the heating and drying of the ink can be more efficiently performed.

The heating drum may refer to, for example, a structure of the heating roller described in JP2020-16355A (paragraphs 0032 to 0037, Fig. 3).

A preferable aspect of the heating drum is the same as the preferable aspect of the heating roller.

A diameter of the heating drum is preferably larger than a diameter of the heating roller.

**In** a case where the heating drying device X (heating drying device X1) includes the heating drum, a heating temperature of at least one of the plurality of heating rollers may be higher than a heating temperature of the heating drum.
As a result, the heating and drying of the ink can be more efficiently performed.

<Hot Air Drying Device>

The heating drying device X may include a hot air drying device (for example, a dryer) configured to blow hot air to the ink-applied surface in the recording medium to dry the ink.
For example, in a case where the plurality of heating rollers are disposed in an arc shape, a plurality of dryers as the hot air drying device may be disposed outside the heating rollers disposed in the arc shape.

<Ink Jet Recording Device including Heating Drying Device X>

The recording method according to the present disclosure can be performed using an ink jet recording device including the above-described heating drying device X and an ink jet head.
The ink jet recording device may refer to, for example, JP2020-16355A.
Hereinafter, the above-described ink jet recording device will be described with reference to the drawings.
In the drawing and description of the present disclosure, substantially the same elements (for example, components or parts) will be represented by the same reference numerals, and the description thereof may not be repeated.
Fig. 1 is a view conceptually showing an ink jet recording device 100 that is an example of the ink jet recording device used in the ink jet recording method according to the present disclosure.
As shown in Fig. 1, the ink jet recording device 100 includes an ink application unit 111 including ink jet heads 111A to 111D configured to jet and apply ink to continuous paper 110 as a recording medium.
In the ink application unit 111, for example, full-line ink jet heads 111A, 111B, 111C, and 111D corresponding to four colors are disposed in order from the upstream side in a transport direction of the continuous paper 110. The heads 111 apply, for example, black (K) ink, cyan (C) ink, magenta (M) ink, and yellow (Y) ink to the continuous paper 110, respectively.
The kinds and number of the colors are not limited to this example.
The ink jetted from each of the heads 111 contains water, a pigment, a pigment dispersing resin, and an acrylic resin as a resin other than the pigment dispersing resin.
The continuous paper 110 is fed from a feeding roller 102, is transported by a transport roller 112 of a transport unit 103 on a transport guide member 113 disposed opposite to the ink application unit 101, and is guided to be transported (moved) by the transport guide member 113.
The continuous paper 110 to which the ink is applied by the ink application unit 101 is transported by a discharge roller 118 through a heating drying device 104, and is wound by a winding roller 105.
The heating drying device 104 is an example of the heating drying device used in the recording method according to the present disclosure, and more specifically is an example of the above-described heating drying device X1 (that is, the heating drying device X1 in the aspect including the heating drum).
Fig. 2 is an enlarged view showing the heating drying device 104.
As shown in Fig. 2, the heating drying device 104 includes, as a heating member configured to come into contact with an ink non-applied surface of the continuous paper 110 and to heat the continuous paper 110, heating rollers 11 (11A to 11J) and a heating drum 12.
The plurality of heating rollers 11 have a smaller diameter than the heating drum 12.
The diameters of the plurality of heating rollers 11 may be the same as or different from each other.
The heating drying device 104 includes guide rollers 13A to 13K configured to come into contact with an ink-applied surface of the continuous paper 110 to which the ink is applied (specifically, the continuous paper 110 heated by the heating drum 12) and to guide the continuous paper 110 to which the ink is applied.
Here, the guide roller 13A is a guide roller that guides the continuous paper 110 heated by the heating drum 12 to the heating roller 11J.
Each of the heating rollers 13B to 13K is a guide roller that guides the continuous paper 110 guided by the guide roller 13A to come into contact with the heating rollers 11I to 11A.
In the heating drying device 104, a transport path of the continuous paper 110 is formed by the plurality of heating rollers 11 (that is, the heating rollers 11A to 11J; hereinafter, the same applies), the heating drum 12, and the plurality of guide rollers 13 (that is, the guide rollers 13A to 13K; hereinafter, the same applies) described below.
Specifically, the continuous paper 110 is transported while being in contact with an outer peripheral side of the plurality of heating rollers 11 disposed in an arc shape upstream of the heating drum 12, passes through the heating drum 12, is guided by the plurality of guide rollers 13, and is transported again while being contact with an inner peripheral side of

the plurality of heating rollers 11.

In this case, even on the upstream side of the heating drum 12 and even after passing through the heating drum 12, the plurality of heating rollers 11 come into contact with the ink non-applied surface side of the continuous paper 110 and heat and dry the ink applied to the continuous paper through the continuous paper 110.

In addition, as in the plurality of heating rollers 11, the heating drum 12 also comes into contact with the ink non-applied surface side of the continuous paper 110 and heats and dries the ink applied to the continuous paper through the continuous paper 110.

The plurality of guide rollers 13 guide the continuous paper 110 to the plurality of heating rollers 11 while being in contact with the ink-applied surface side of the continuous paper 110.

In addition, the heating drying device 104 includes:

guide rollers 17A to 17D for guiding the continuous paper 110 transported from the ink application unit 101 in a direction of an arrow in Fig. 2 to the heating roller 11A in the heating drying device 104; and

a plurality of guide rollers 17E and 17D for guiding the continuous paper 110 heated by the plurality of heating rollers 11 and the heating drum 12 to the outside of the heating drying device 104.

In the heating and drying in the heating drying device 104, the ink is heated through the continuous paper 110 while the ink non-applied surface of the continuous paper 110 is in contact with the plurality of heating rollers 11 disposed in an arc shape.

Next, the ink is heated through the continuous paper 110 while the ink non-applied surface of the continuous paper 110 is in contact with the heating drum 12 that is disposed inside the plurality of heating rollers 11 disposed in an arc shape.

Next, the continuous paper 110 is guided to the heating rollers 11 again by the guide rollers 13, and the ink is heated through the continuous paper 110 while the ink non-applied surface of the continuous paper 110 is in contact again with the heating rollers 11.

Here, in the heating drying device 104, the heating drum 12 may be removed.

In this case, for example, by changing the heating drum 12 to a guide roller having a smaller diameter, the ink non-applied surface of the continuous paper 110 can be brought into contact with the heating rollers 11 twice as in the heating drying device 104.

As described above, the heating drying device 104 includes:

a first transport path 10A through which the continuous paper 110 to which the ink is applied is transported while being in contact with the plurality of heating rollers 11, and

a second transport path 10B through which the continuous paper 110 having passed through the first transport path 10A is transported while being guided by the plurality of guide rollers 13 to be in contact again with the plurality of heating rollers 11 in contact with the first transport path 10A.

Therefore, the heating and drying of the ink applied to the continuous paper 110 can be efficiently performed.

Accordingly, in the heating drying device 104, for example, a reduction in the length of the heating drying device and a reduction in the size of the heating drying device can be realized.

In the second transport path 10B, the continuous paper 110 does not need to come into contact with all of the plurality of heating rollers 11 in contact with the first transport path 10A.

In the second transport path 10B, the continuous paper 110 may come into contact with at least a part of the plurality of heating rollers 11 in contact with the first transport path 10A.

The heating drying device 104 includes, between the first transport path 10A and the second transport path 10B, a third transport path through which the continuous paper 110 having passed through the first transport path 10A is transported while being in contact with the heating drum 12.

Therefore, the heating and drying of the ink applied to the continuous paper 110 can be more efficiently performed.

In the heating drying device 104, a heating temperature of at least one of the plurality of heating rollers 11 may be higher than a heating temperature of the heating drum 12.

In this case, the heating and drying of the ink applied to the continuous paper 110 can be more efficiently performed.

In the heating drying device 104, a plurality of dryers as a hot air drying device configured to blow hot air to the surface of the ink film may be disposed outside the plurality of heating rollers 11 disposed in an arc shape (not shown).

In this case, the heating and drying of the ink applied to the continuous paper 110 can be more efficiently performed.

In the ink jet recording method using the ink jet recording device 100, each of the inks applied from the ink jet

heads 111A to 111D contains water, a pigment, a pigment dispersing resin, and an acrylic resin as a resin other than the pigment dispersing resin.

In addition, the guide rollers 13A to 13K, 17E, and 17F in the heating drying device 104 of the ink jet recording device 100 guide the continuous paper 110 while being in contact with the ink-applied surface in the recording medium to which the ink is applied.

In the ink jet recording method using the ink jet recording device 100, a product (A × B) of A (the unit is mgKOH/g) that is an acid value of the acrylic resin (that is, the acrylic resin as the resin other than the pigment dispersing resin) in each of the inks and B that is a kinetic friction coefficient of the outer peripheral surface of the guide roller is 1.0 to 5.0.

In the ink jet recording method using the ink jet recording device 100, at least one ink and at least one guide roller only have to satisfy the relationship where the product (A × B) is 1.0 to 5.0.

<Ink>

The ink according to the present disclosure (the ink used in the recording method according to the present disclosure; hereinafter the same applies) contains water, a pigment, a pigment dispersing resin, and an acrylic resin as a binder resin.

The ink according to the present disclosure may contain other components.

(Water)

The ink according to the embodiment of the present disclosure includes water.

The content of water with respect to the total amount of the ink is preferably 20% by mass or more, more preferably 30% by mass or more, and still more preferably 40% by mass or more.

The upper limit of the content of water also depends on the amounts of other components. The upper limit of the content of water with respect to the total amount of the ink may be, for example, 90% by mass or 80% by mass.

(Pigment)

The ink according to the present disclosure contains at least one kind of a pigment.

The pigment may be an organic pigment or an inorganic pigment.

Examples of the organic pigment include an azo pigment, a polycyclic pigment, a chelate dye, a nitro pigment, a nitroso pigment, and aniline black. Among these, the organic pigment is preferably an azo pigment or a polycyclic pigment.

Examples of the azo pigment include azo lake, an insoluble azo pigment, a condensed azo pigment, and a chelated azo pigment.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate and an acid dye-type chelate.

Examples of the inorganic pigment include titanium oxide, iron oxide, calcium carbonate, barium sulfate, aluminum hydroxide, barium yellow, cadmium red, chrome yellow, and carbon black.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

A volume average particle diameter of the pigment is preferably in a range of 10 nm to 200 nm, more preferably in a range of 10 nm to 180 nm, and still more preferably in a range of 10 nm to 150 nm. In a case where the volume average particle diameter thereof is 200 nm or less, the color reproducibility is satisfactory, and the jettability is improved in a case where an image is recorded by an ink jet recording method. In addition, in a case where the volume average particle size is 10 nm or more, light fastness is improved.

In addition, a particle size distribution of the pigment is not particularly limited, and may be any of a wide particle size distribution or a monodispersed particle size distribution. Furthermore, a mixture of two or more pigments each having a monodispersed particle size distribution may be used.

The volume average particle size and the particle size distribution of the pigment are values measured by a particle size distribution analyzer (for example, MICROTRAC UPA (registered trademark) EX150 manufactured by NIKKISO CO., LTD.).

The content of the pigment with respect to the total amount of the ink is preferably 1% by mass to 20% by mass and more preferably 1% by mass to 10% by mass.

(Pigment Dispersing Resin)

The ink in the present disclosure contains at least one pigment dispersing resin.

In the present disclosure, the pigment dispersing resin is a resin having a function of dispersing the pigment.

The form of the pigment dispersing resin is not particularly limited, and may be any of a random resin, a block resin, or a graft resin.

The pigment dispersing resin is preferably a resin having a crosslinking structure. It is considered that, in a case where the pigment dispersing resin is a resin having a crosslinking structure, the pigment dispersing resin is unlikely to be released from the surface of the pigment, and thus the dispersion stability of the pigment is high.

In the present disclosure, the resin refers to a compound having a weight-average molecular weight (Mw) of 1,000 or higher.

A method of measuring the weight-average molecular weight (Mw) in the present disclosure will be described below.

The resin having a crosslinking structure is not particularly limited as long as the resin has at least one crosslinking structure in a molecule.

Whether or not the resin in the ink has a crosslinking structure can be determined, for example, using the following method. First, the resin is separated from the ink by using a separation method such as solvent extraction. The presence or absence of the crosslinking structure can be comprehensively determined by analyzing the separated resin using various analysis methods such as a nuclear magnetic resonance method (NMR), an infrared spectroscopy method (IR), and a thermal analysis method.

The resin having a crosslinking structure (hereinafter, also referred to as "crosslinked resin") is formed, for example, by crosslinking a non-crosslinked resin (hereinafter, also referred to as "non-crosslinked resin") with a crosslinking agent. It is preferable that the non-crosslinked resin is a water-soluble resin.

In the present disclosure, "water-soluble" refers to a property in which 1 g or more of a substance is dissolved in 100 g of water at 25°C. "Water-soluble" refers to a property in which preferably 3 g or more (more preferably 10 g or more) of a substance is dissolved in 100 g of water at 25°C.

Even in a case where the non-crosslinked resin is water-soluble, the crosslinked resin is not necessarily water-soluble.

Examples of the non-crosslinked resin include a vinyl resin, an acrylic resin, a urethane resin, and a polyester resin. The non-crosslinked resin is preferably an acrylic resin.

It is preferable that the non-crosslinked resin is a resin containing a functional group that is crosslinkable with a crosslinking agent. Examples of the crosslinkable functional group include a carboxy group or a salt thereof, an isocyanate group, and an epoxy group. Among these, from the viewpoint of improving the dispersibility of the pigment, a carboxy group or a salt thereof is preferable, and a carboxy group is particularly preferable as the crosslinkable functional group. That is, it is preferable that the non-crosslinked resin is a resin containing a carboxy group.

It is preferable that the non-crosslinked resin is a copolymer having a structural unit derived from a monomer containing a carboxy group (hereinafter, referred to as "carboxy group-containing monomer"). The structural unit derived from the carboxy group-containing monomer in the copolymer may be used alone or in combination of two or more kinds thereof. The copolymer may be a random copolymer or a block copolymer, but is preferably a random copolymer.

Examples of the carboxy group-containing monomer include (meth)acrylic acid, β-carboxyethyl acrylate, fumaric acid, itaconic acid, maleic acid, and crotonic acid.

From the viewpoints of the crosslinkability and the dispersibility, (meth)acrylic acid or β-carboxyethyl acrylate is preferable, and (meth)acrylic acid is more preferable as the carboxy group-containing monomer.

The content of the structural unit derived from a carboxy group-containing monomer is preferably in a range of 5% by mass to 40% by mass, more preferably in a range of 10% by mass to 35% by mass, and still more preferably in a range of 10% by mass to 30% by mass with respect to the total amount of the non-crosslinked resin.

It is preferable that the non-crosslinked resin has a structural unit derived from a hydrophobic monomer in addition to the structural unit derived from a carboxy group-containing monomer.

The structural unit derived from the hydrophobic monomer in the copolymer may be used alone or in combination of two or more kinds thereof.

Examples of the hydrophobic monomer include (meth)acrylate containing an alkyl group having 1 to 20 carbon atoms, (meth)acrylate having an aromatic ring (for example, benzyl (meth)acrylate, phenoxyethyl (meth)acrylate, and the like), styrene, and a styrene derivative.

The content of the structural unit derived from the hydrophobic monomer with respect to the total amount of the non-crosslinked resin is preferably 60% by mass to 95% by mass, more preferably 65% by mass to 90% by mass, and still more preferably 70% by mass to 90% by mass.

The non-crosslinked resin is preferably a random copolymer including the structural unit derived from the carboxy group-containing monomer and at least one of a structural unit derived from a (meth)acrylate containing an alkyl group

having 1 to 20 carbon atoms or a structural unit derived from a (meth)acrylate having an aromatic ring, more preferably a random copolymer having a structural unit derived from (meth)acrylic acid and a structural unit derived from a (meth) acrylate having an aromatic ring, and still more preferably a copolymer having a structural unit derived from (meth)acrylic acid and a structural unit derived from benzyl (meth)acrylate.

The weight-average molecular weight (Mw) of the non-crosslinked resin is not particularly limited, but is preferably 3,000 to 300,000, more preferably 5,000 to 200,000, and still more preferably 7,000 to 100,000 from the viewpoint of the dispersibility of a white pigment.

The preferable ranges of the weight-average molecular weight of the crosslinked resin are the same as the preferable ranges of the weight-average molecular weight of the non-crosslinked resin.

It is preferable that the crosslinking agent used in a case where the non-crosslinked resin is crosslinked is a compound having two or more reaction sites with the non-crosslinked resin (for example, a resin containing a carboxy group). The crosslinking agent may be used alone or in combination of two or more kinds thereof.

A preferable combination of the crosslinking agent and the non-crosslinked resin is a combination of a compound containing two or more epoxy groups (that is, a bi- or higher functional epoxy compound) and a resin containing a carboxy group. **In** this combination, a crosslinking structure is formed by the reaction between the epoxy group and the carboxy group. It is preferable that the formation of the crosslinking structure by the crosslinking agent is performed after the pigment is dispersed by the non-crosslinked resin.

Examples of the bi- or higher functional epoxy compound include ethylene glycol diglycidyl ether, polyethylene glycol diglycidyl ether, 1,6-hexanediol diglycidyl ether, diethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable as the bi- or higher functional epoxy compound.

The crosslinking agent may be a commercially available product.

Examples of the commercially available product include Denacol EX-321, EX-821, EX-830, EX-850, and EX-851 (manufactured by Nagase ChemteX Corporation).

From the viewpoints of a crosslinking reaction rate and dispersion stability after crosslinking, a molar ratio between a reaction site (for example, an epoxy group) in the crosslinking agent and a reaction site (for example, a carboxy group) in the non-crosslinked resin is preferably 1:1.1 to 1:10, more preferably 1:1.1 to 1:5, and still more preferably 1:1.1 to 1:3.

A mixing ratio between the pigment and the pigment dispersing resin is preferably 1:0.02 to 1:2, more preferably 1:0.03 to 1:1.5, and still more preferably 1:0.04 to 1:1 by mass.

(Acrylic Resin as Binder Resin)

The ink according to the present disclosure contains at least one kind of an acrylic resin as a binder resin.

In the present disclosure, the binder resin refers to the resin in the ink that is the resin other than the above-described pigment dispersing resin.

In the present disclosure, the acrylic resin refers to a resin having at least one of a structural unit derived from (meth)acrylic acid or a structural unit derived from (meth)acrylate.

It is preferable that the acrylic resin as the binder resin contains at least one kind of a structural unit derived from styrene.

The content of the structural unit derived from styrene with respect to the total amount of the acrylic resin as the binder resin is preferably 5% by mass to 50% by mass, more preferably 10% by mass to 40% by mass, and still more preferably 10% by mass to 30% by mass.

It is preferable that the acrylic resin as the binder resin contains at least one kind of a structural unit derived from methacrylic acid.

It is preferable that the structural unit derived from methacrylic acid contains at least one of a carboxy group or a salt of a carboxy group. As the salt of the carboxy group, an alkali metal salt is preferable, and a sodium salt or a potassium salt is more preferable.

The content of the structural unit derived from methacrylic acid with respect to the total amount of the acrylic resin as the binder resin is preferably 1% by mass to 20% by mass and more preferably 2% by mass to 15% by mass.

It is preferable that the acrylic resin as the binder resin contains at least one kind of a structural unit derived from a methacrylic acid ester.

The methacrylic acid ester is preferably an alkyl ester of methacrylic acid and more preferably methyl methacrylate or ethyl methacrylate.

The content of the structural unit derived from the methacrylic acid ester with respect to the total amount of the acrylic resin as the binder resin is preferably 20% by mass to 90% by mass and more preferably 30% by mass to 85% by mass.

The acrylic resin as the binder resin may contain at least one kind of a structural unit derived from an acrylic acid ester.
The acrylic acid ester is preferably an alkyl ester of acrylic acid and more preferably 2-ethylhexyl acrylate.
The content of the structural unit derived from the acrylic acid ester with respect to the total amount of the acrylic resin as the binder resin is preferably 0% by mass to 40% by mass, more preferably 0% by mass to 30% by mass, still more preferably 0% by mass to 20% by mass, and still more preferably 0% by mass to 10% by mass.

-Acid Value (A)-

In the present disclosure, the acid value of the acrylic resin as the binder resin may be represented by "A".
From the viewpoint of further reducing image defects and a decrease in jettability, the acid value (A) of the acrylic resin as the binder resin is preferably 10 mgKOH/g to 100 mgKOH/g, more preferably 20 mgKOH/g to 80 mgKOH/g, still more preferably 25 mgKOH/g to 70 mgKOH/g, and still more preferably 30 mgKOH/g to 60 mgKOH/g.
In the present disclosure, the acid value of the acrylic resin as the binder resin may be represented by "A".

-Glass Transition Temperature (T2)-

In the present disclosure, a glass transition temperature of the acrylic resin as the binder resin may be represented by "T2".
The glass transition temperature (T2) of the acrylic resin as the binder resin is preferably 5°C or higher, more preferably 30°C or higher, and still more preferably 50°C or higher.
The upper limit of T2 is not particularly limited and is, for example, 150°C, preferably 130°C, and more preferably 120°C.
A preferable range of T2 is, for example, 5°C to 150°C.
In the present disclosure, the glass transition temperature (T2) of the acrylic resin as the binder resin refers to a calculation Tg calculated from Expression 1 below.

$$1 / Tg = \Sigma (Xi / Tgi) \ldots (1)$$

Here, it is assumed that a polymer to be calculated is obtained by copolymerization of n types monomer components (i=1 to n). Xi represents a mass fraction ($\Sigma Xi = 1$) of an i-th monomer, and Tgi represents a glass transition temperature (absolute temperature) of a homopolymer of the i-th monomer. Here, $\Sigma$ represents the sum of i=1 to n. As the value (Tgi) of the glass transition temperature of the homopolymer of each monomer, the value of Polymer Handbook (3rd Edition) (J. Brandrup, E. H. Immergut (Wiley-Interscience, 1989)) is adopted.

-Weight-Average Molecular Weight (C)-

In the present disclosure, the weight-average molecular weight of the acrylic resin as the binder resin may be represented by "C".
The weight-average molecular weight (C) of the acrylic resin as the binder resin is preferably 4000 to 300000, more preferably 4000 to 200000, and still more preferably 5000 to 150000.
In the present disclosure, the weight-average molecular weight (Mw) refers to a value measured by gel permeation chromatography (GPC).
For the measurement by gel permeation chromatography (GPC), HLC (registered trademark)-8020GPC (manufactured by Tosoh Corporation) is used as a measuring device, three columns of TSKgel (registered trademark) Super Multipore HZ-H (4.6 mmID x 15 cm, manufactured by Tosoh Corporation) are used as a column, and tetrahydrofuran (THF) is used as an eluent. In addition, the measurement is performed under measurement conditions of a sample concentration of 0.45% by mass, a flow rate of 0.35 mL/min, a sample injection volume of 10 μL, and a measurement temperature of 40°C using an RI detector. A calibration curve is created using 8 samples of "F-40", "F-20", "F-4", "F-1", "A-5000", "A-2500", "A-1000", and "n-propylbenzene" which are "Standard Samples TSK standard, polystyrene" (manufactured by TOSOH Corporation).
The acrylic resin as the binder resin may be a water-soluble resin or resin particles.
From the viewpoint of the jettability of the ink, the acrylic resin as the binder resin is preferably a water-soluble resin.
The definition "water-soluble" in the water-soluble resin is as described above.
The content of the acrylic resin as the binder resin with respect to the total amount of the ink is preferably 1% by mass to 20% by mass, more preferably 1% by mass to 15% by mass, still more preferably 1% by mass to 10% by mass, and

still more preferably 2% by mass to 8% by mass.

(Silicone-Based Surfactant)

It is preferable that the ink according to the embodiment of the present disclosure contains at least one silicone-based surfactant. As a result, image defects are further suppressed.

As the silicone-based surfactant, a polyether-modified silicone-based surfactant is preferable, and a compound represented by Formula (D1) is more preferable.

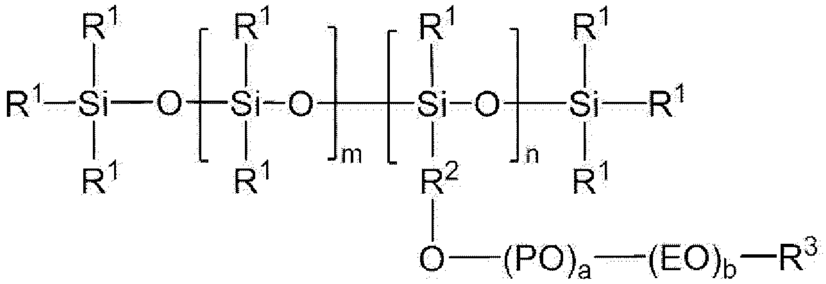

(D1)

In Formula (D1), $R^1$'s each independently represent an alkyl group having 1 to 3 carbon atoms or a hydroxy group, $R^2$ represents an alkanediyl group having 2 to 5 carbon atoms, $R^3$ represents a hydrogen atom, an alkyl group having 1 to 3 carbon atoms, or a hydroxy group, PO represents a propyleneoxy group, and EO represents an ethyleneoxy group. a, b, m, and n represent an average addition molar number of each unit, where a represents 0 to 10, b represents 1 to 50, m represents 1 to 500, and n represents 1 to 50.

In Formula (D1), the arrangement of PO and EO may be arrangement of a block copolymer or arrangement of a random copolymer.

In Formula (D1), arrangement t of a structural unit with a subscript m and a structural unit with a subscript n may be arrangement of a block copolymer or arrangement of a random copolymer.

$R^1$ represents preferably an alkyl group having 1 to 3 carbon atoms and more preferably a methyl group.

$R^2$ represents preferably an alkanediyl group having 3 or 4 carbon atoms and more preferably a trimethylene group.

$R^3$ represents preferably an alkyl group having 1 to 3 carbon atoms and more preferably a methyl group.

It is more preferable that a represents 0, b represents 1 to 15, m represents 1 to 10, and n represents 1 to 5. Further, it is more preferable that a represents 0, b represents 3 to 10, m represents 1 to 3, and n represents 1 to 3.

As the silicone-based surfactant, a commercially available product may be used.

Examples of the commercially available product of the silicone-based surfactant include BYK-302, BYK-307, BYK-331, BYK-333, BYK-345, BYK-347, BYK-348, BYK-349, BYK-378, BYK-3400, BYK-3450, BYK-3451, BYK-3455, and BYK-3760 (all of which are manufactured by BYK Japan K.K.), KF-351A, KF-352A, KF-353, KF-354L, KF-355A, KF-615A, KF-945, KF-640, KF-642, KF-643, KF-644, KF-6011, KF-6012, KF-6015, KF-6017, and KF-6020 (all manufactured by Shin-Etsu Chemical Co., Ltd.), SILFACE SAG002, SILFACE SAG005, SILFACE SAG008, and SILFACE SAG503A (all of which are manufactured by Nissin Chemical Co., Ltd.), and TEGOWet KL245, TEGOWet 240, TEGOWet 250, TEGOWet 260, TEGOWet 270, and TEGOWet 280 (all manufactured by Evonik Industries AG).

These commercially available products are compounds represented by Formula (D1).

The content of the silicone-based surfactant with respect to the total amount of the ink is preferably 0.01% by mass to 3.0% by mass, more preferably 0.02% by mass to 2.0% by mass, and still more preferably 0.03% by mass to 1.5% by mass.

(Surfactant other than Silicone-Based Surfactant)

The ink according to the present disclosure may contain at least one kind of a surfactant other than the silicone-based surfactant (hereinafter, also referred to as other surfactant).

Examples of the other surfactant include an acetylene glycol-based surfactant and an alkylene oxide adduct of an alcohol.

As the acetylene glycol-based surfactant, for example, a compound represented by Formula (A1) is preferable.

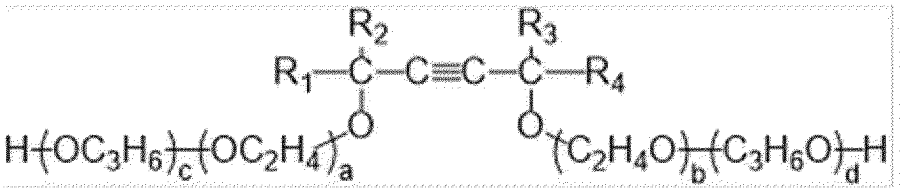

(A1)

In Formula (A1), $R_1$ and $R_4$ each independently represent an alkyl group having 3 to 10 carbon atoms, and $R^2$ and $R^3$ each independently represent a methyl group or an ethyl group.
a, b, c, and d represent an average addition molar number of each unit and each independently represent 0 to 50.

Preferable examples of the acetylene glycol-based surfactant include:

acetylene glycol selected from the group consisting of 2,4,7,9-tetramethyl-5-decyne-4,7-diol, 3,6-dimethyl-4-octyne-3,6-diol, 2,5,6,11-tetramethyl-6-dodecyne-5,8-diol, 2,5-dimethyl-3-hexyne-2,5-diol, and 2,5,8,11-tetramethyl-6-dodecyne-5,8-diol; and
an ethylene oxide adduct of the acetylene glycol.

The acetylene glycol-based surfactant can be synthesized, for example, by causing acetylene to react with ketone or aldehyde corresponding to the target acetylene glycol.

The acetylene glycol-based surfactant can be obtained, for example, by a method described in "Introduction of New Surfactants" (published by Sanyo Chemical Industries, Ltd., completely revised edition, 1992) written by Takehiko Fujimoto, pp. 94 to 107.

Examples of the commercially available product of the acetylene glycol-based surfactant include SURFYNOL 104E (HLB value: 4), SURFYNOL 104H (HLB value: 4), SURFYNOL 104A (HLB value: 4), SURFYNOL 104PA (HLB value: 4), SURFYNOL 104PG-50 (HLB value: 4), SURFYNOL 104S (HLB value: 4), SURFYNOL 420 (HLB value: 4), SURFYNOL 440 (HLB value: 8), SURFYNOL 465 (HLB value: 13), SURFYNOL 485 (HLB value: 17), SURFYNOL SE (HLB value: 6), SURFYNOL SE-F (HLB value: 6), SURFYNOL 61 (HLB value: 6), SURFYNOL 82 (HLB value: 4), SURFYNOL DF110D (HLB value: 3), DYNOL 604 (HLB value: 8), DYNOL 607 (HLB value: 8), SURFYNOL 2502 (HLB value: 8), SURFYNOL TG (HLB value: 9), OLFINE E1004 (HLB value: 7 to 9), and OLFINE E1010 (HLB value: 13 to 14) (all of which are manufactured by Evonik Industries AG); and ACETYLENOL E00, ACETYLENOL E13T, ACETYLENOL E40, ACETYLENOL E60, ACETYLENOL E100, and ACETYLENOL E200 (all of which are manufactured by Kawaken Fine Chemicals Co., Ltd.).

As the alkylene oxide adduct of the alcohol, an ethylene oxide adduct of an alcohol or an ethylene oxide and propylene oxide adduct of an alcohol is preferable, and an ethylene oxide adduct of an alcohol is more preferable.

As the alkylene oxide adduct of the alcohol, a compound represented by Formula (2) is more preferable.

$$R_3O\text{-}[(EO)_m/(PO)_n]\text{-}H \quad ... \qquad \text{Formula (2)}$$

In Formula (2), $R_3$ represents a hydrocarbon group having 6 or more and 30 or less carbon atoms, EO represents an ethyleneoxy group, and PO represents a propyleneoxy group.

In Formula (2), m and n represent an average addition molar number, m represents 2 or more and 100 or less, n represents 0 or more and 50 or less, and the sum of m and n represents 2 or more and 120 or less.

In Formula (2), the notation "$(EO)_m/(PO)_n$" represents that the arrangement of EO and PO may be arrangement of a random copolymer or arrangement of a block copolymer. In the moiety represented by "$(EO)_m/(PO)_n$", the addition order of EO and PO is not limited.

In Formula (2), in a case where n represents 2 or more, the compound represented by Formula (2) may be a block copolymer or a random copolymer. In a case where the compound represented by Formula (2) is a block copolymer, a compound in which an oxyethylene group is disposed on a hydroxy group side, that is, is preferably RO-(PO)(EO)-H.

In addition, in a case where the compound represented by Formula (2) is a block copolymer, the compound may be a triblock copolymer of RO-(EO)(PO)(EO)-H.

Examples of a commercially available product of the alkylene oxide adduct of the alcohol include:

as an ethylene oxide adduct of lauryl alcohol, EMULGEN 102 (HLB: 6.3, average addition molar number of EO: 2), EMULGEN 103 (HLB: 8.1, average addition molar number of EO: 3), EMULGEN 103 (HLB: 9.7, average addition molar number of EO: 4), EMULGEN 108 (HLB: 12.1, average addition molar number of EO: 6), EMULGEN 109P (HLB: 13.6, average addition molar number of EO: 8), EMULGEN 120 (HLB: 15.3, average addition molar number of EO: 13), EMULGEN 147 (HLB: 16.3, average addition molar number of EO: 17), and EMULGEN 150 (HLB: 18.4, average addition molar number of EO: 44) manufactured by Kao Corporation; and

as an ethylene oxide adduct of a secondary alcohol having 12 carbon atoms, TERGITOL TMN-3 (HLB: 8.1, average addition molar number of EO: 3), TRITON HW-1000 (HLB: 10, average addition molar number of EO: 6), TERGITOL TMN-6 (HLB: 13.1, average addition molar number of EO: 8), TERGITOL TMN-100X (HLB: 14.0, average addition molar number of EO: 9), and TERGITOL TMN-10 (HLB: 14.4, average addition molar number of EO: 10) manufactured by Dow Chemical Company.

In addition, examples of a commercially available product of the alkylene oxide adduct of the alcohol also include EMULGEN 707 (an ethylene oxide adduct of a secondary alcohol having 11 to 15 carbon atoms; HLB: 12.1, average addition molar number of EO: 6) and EMULGEN 220 (an ethylene oxide adduct of a linear primary alcohol having 16 to 18 carbon atoms; HLB: 14.2, average addition molar number of EO: 13) manufactured by Kao Corporation.

The content of the other surfactant with respect to the total amount of the ink is preferably 0.01% by mass to 5.0% by mass, and more preferably 0.02% by mass to 3.0% by mass.

(Water-Soluble Organic Solvent)

The ink according to the present disclosure may contain at least one kind of a water-soluble organic solvent.

As a result, the jettability of the ink is further improved.

In the present disclosure, "water-soluble" in the "water-soluble organic solvent" refers to a property in which 1 g or more of a substance is dissolved in 100 g of water at 25°C.

The type of the water-soluble organic solvent which can be contained in the ink is not particularly limited, and examples thereof include:

monoalcohol having 1 to 4 carbon atoms;
diol such as 1,3-propanediol, 1,2-butanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol;
triol such as glycerin, 1,2,6-hexanetriol, and trimethylolpropane;
alkylene glycol such as ethylene glycol and propylene glycol (another name: 1,2-propanediol);
alkylene glycol monoalkyl ether such as ethylene glycol monoalkyl ether and propylene glycol monoalkyl ether;
polyalkylene glycol such as diethylene glycol, triethylene glycol, tetraethylene glycol, pentaethylene glycol, dipropylene glycol, and polyoxyethylene polyoxypropylene glycol;
polyalkylene glycol ether such as diethylene glycol monoalkyl ether, triethylene glycol monoalkyl ether, tripropylene glycol monoalkyl ether, and polyoxypropylene glyceryl ether; and
2-pyrrolidone and N-methyl-2-pyrrolidone.

It is preferable that the water-soluble organic solvent in the ink includes at least one kind selected from the group consisting of alkylene glycol and alkylene glycol monoalkyl ether.

The content of the water-soluble organic solvent with respect to the total amount of the ink is preferably 10% by mass to 40% by mass and more preferably 15% by mass to 30% by mass.

(Other Components)

Optionally, the ink according to the present disclosure may contain components other than the above-described components.

Examples of the other components include colloidal silica, waxes, inorganic salts, solid wetting agents (urea and the like), fading inhibitors, emulsion stabilizers, penetration enhancers, ultraviolet absorbing agents, preservatives, fungicides, pH adjusters, antifoaming agents, viscosity adjusters, dispersion stabilizers, rust inhibitors, chelating agents, and water-soluble polymer compounds.

(Physical Properties of Ink)

-Viscosity-

A viscosity of the ink according to the present disclosure is preferably 1.2 mPa·s to 15.0 mPa·s, more preferably 2.0 mPa·s to 13.0 mPa·s, and still more preferably 2.5 mPa·s to 10.0 mPa·s.

The viscosity of the ink is measured at a temperature of 30°C using a rotary viscometer, for example, product name "VISCOMETER TV-22" manufactured by Toki Sangyo Co., Ltd.

-pH-

From the viewpoint of the storage stability of the ink, the pH of the ink according to the present disclosure is preferably 6.0 to 11.0, more preferably 7.0 to 10.0, and still more preferably 7.0 to 9.5.
The pH of the ink is measured at a temperature of 25°C using a pH meter, for example, product name "WM-50EG" manufactured by DKK-TOA CORPORATION.

<Product of A and B>

As described above, in the recording method according to the present disclosure, the product of A that is the acid value of the acrylic resin in units of mgKOH/g and B that is the kinetic friction coefficient of the outer peripheral surface of the guide roller is 1.0 to 5.0.
The product of A and B is preferably 1.0 to 3.5.

<A/T1 Ratio>

In the recording method according to the present disclosure, In a case where the acid value of the acrylic resin as the binder resin in units of mgKOH/g is represented by A and the drying temperature of the ink in the heating and drying in units of °C is represented by T1, from the viewpoint of further suppressing image defects, an A/T1 ratio is preferably 0.70 or less, more preferably 0.60 or less, and still more preferably 0.50 or less.
The lower limit of the A/T1 ratio is not particularly limited and is, for example, 0.10.
In the present disclosure, the drying temperature of the ink in the heating and drying that is represented by T1 refers to the maximum temperature of the surface of the ink film (that is, the film formed of the ink applied to the recording medium; hereinafter, the same applies) in the heating and drying, and refers to a value measured using a contactless thermometer.
In Examples described below, the drying temperature (T1) of the ink in the heating and drying was measured by FT-H20 (manufactured by Keyence Corporation) as the contactless thermometer.

<T2/B Ratio>

In the recording method according to the present disclosure, in a case where the glass transition temperature of the acrylic resin as the binder resin in units of °C is represented by T2 and the kinetic friction coefficient of the outer peripheral surface of the guide roller is represented by B, from the viewpoint of further suppressing image defects, a T2/B ratio is preferably 100 or more, more preferably 800 or more, still more preferably 820 or more, and still more preferably 1000 or more.
The upper limit of the T2/B ratio is not particularly limited but is, for example, 2500.

<(C/B Ratio)/1000>

In the recording method according to the present disclosure, in a case where the weight-average molecular weight of the acrylic resin as the binder resin is represented by C and the kinetic friction coefficient of the outer peripheral surface of the guide roller is represented by B, from the viewpoint of further suppressing image defects, "(C/B ratio)/1000" that is a value obtained by dividing a C/B ratio by 1000 is preferably 50 or more, more preferably 60 or more, and still more preferably 100 or more.
The upper limit of "the (C/B ratio)/1000" is not particularly limited but is, for example, 6000.

<Absolute Value of Difference between T2 and T1>

In the recording method according to the present disclosure, in a case where the glass transition temperature of the acrylic resin as the binder resin in units of °C is represented by T2 and the drying temperature of the ink in the heating and drying in units of °C is represented by T1, from the viewpoint of further suppressing image defects, |T1 - T2| that is an absolute value of a difference between T2 and T1 is preferably 120 or less, more preferably 70 or less, and still more preferably 60 or less.

<Recording Medium>

The recording medium in the recording method according to the present disclosure is not particularly limited, and examples thereof include coated paper used for general offset printing or the like. In the coated paper, a coating layer is

provided by applying a coating material to a surface of high-quality paper, alkaline paper, or the like that is mainly formed of cellulose and is not surface-treated in general.

The coated paper may be generally commercially available. As the coated paper, for example, coated paper for general printing can be used, and specific examples thereof include coated paper (A2, B2) such as "OK TOPCOAT+" (manufactured by OJI PAPER CO., LTD.), and "AURORA COAT" and "ULITE" (manufactured by NIPPON PAPER INDUSTRIES CO., LTD.), and art paper (A1) such as "TOKUBISHI ART" (manufactured by MITSUBISHI PAPER MILLS LIMITED).

The recording medium may be a low water absorption recording medium or a non-water absorption recording medium.

In the present disclosure, the low water absorption recording medium refers to a recording medium having a water absorption coefficient Ka of 0.05 $mL/m^2 \cdot ms^{1/2}$ to 0.5 $mL/m^2 \cdot ms^{1/2}$, preferably 0.1 $mL/m^2 \cdot ms^{1/2}$ to 0.4 $mL/m^2 \cdot ms^{1/2}$, and more preferably 0.2 $mL/m^2 \cdot ms^{1/2}$ to 0.3 $mL/m^2 \cdot ms^{1/2}$.

In addition, the non-water absorption recording medium refers to a recording medium having a water absorption coefficient Ka of less than 0.05 $mL/m^2 \cdot ms^{1/2}$.

The water absorption coefficient Ka is synonymous with one described in JAPAN TAPPI Pulp and Paper Test Method No. 51:2000 (published by Pulp and Paper Technology Association). Specifically, the absorption coefficient Ka is calculated from a difference between the amount of water transfer at a contact time of 100 ms and the amount of water transfer at a contact time of 900 ms, using an automatic scanning absorptometer KM500Win (manufactured by KUMAGAI RIKI KOGYO Co., Ltd.).

It is preferable that the non-water absorption recording medium is a resin base. Examples of the resin base include a base obtained by molding a thermoplastic resin in a sheet shape.

It is preferable that the resin base contains polypropylene, polyethylene terephthalate, nylon, polyethylene, or polyimide.

The resin base may be a transparent resin base or a colored resin base, or at least a part thereof may be subjected to a metal vapor deposition treatment or the like.

The shape of the resin base is not particularly limited, but a sheet-like resin base is preferable. From the viewpoint of the productivity of a printed material, a sheet-like resin base with which a roll can be formed by winding is more preferable.

## Examples

Hereinafter, the present disclosure will be described in more detail using Examples. However, the present disclosure is not limited to the following examples as long as it does not exceed the gist of the present disclosure.

In a case where each of inks was prepared, each of pigment dispersion liquids and a binder resin were manufactured in advance to prepare each of the inks using each of the pigment dispersion liquids and the binder resin.

### <Synthesis of Water-Soluble Resin as Pigment Dispersing Resin Precursor>

As a precursor of a crosslinked resin 1 as the pigment dispersing resin described below, a water-soluble resin 1 (non-crosslinked resin) was synthesized.

Hereinafter, the details will be described.

A monomer feed composition was prepared by mixing methacrylic acid (172 parts by mass), benzyl methacrylate (828 parts by mass), and isopropanol (375 parts by mass).

In addition, 2,2-azobis(2-methylbutyronitrile) (22.05 parts by mass) and isopropanol (187.5 parts by mass) were mixed to prepare an initiator feed composition.

Next, isopropanol (187.5 parts by mass) was heated to 80°C in a nitrogen atmosphere, and a mixture of the monomer feed composition and the initiator feed composition was added dropwise thereto over 2 hours. After completion of the dropwise addition, the obtained solution was further maintained at 80°C for 4 hours and then cooled to 25°C. After the cooling, a solvent was removed under reduced pressure to obtain the water-soluble resin 1 (methacrylic acid/benzyl methacrylate copolymer). In the obtained water-soluble resin 1, the weight-average molecular weight was about 30,000, and the acid value was 112 mgKOH/g.

### <Preparation of Magenta Pigment Dispersion Liquid>

0.8 equivalents of the amount of methacrylic acid in the obtained water-soluble resin 1 (150 parts by mass) were neutralized with a potassium hydroxide aqueous solution. Next, ion exchange water was added thereto to adjust the

concentration to 25% by mass to obtain an aqueous solution of a water-soluble resin Q-1.

The water-soluble resin Q-1 is a neutralized product of the water-soluble resin 1 obtained by changing the carboxy group (-C(=O)OH group) in the above-described water-soluble resin 1 to a -C(=O)ONa group.

The aqueous solution (124 parts by mass) of the water-soluble resin Q-1, a magenta pigment (Pigment Red 122, Chromofine Red, manufactured by Dainichiseika Color & Chemicals Mfg. Co., Ltd.) (48 parts by mass), water (75 parts by mass), and dipropylene glycol (30 parts by mass) were mixed and dispersed using a beads mill (bead diameter: 0.1 mmφ, zirconia beads) until a desired volume average particle diameter was obtained, thereby obtaining a dispersion liquid (non-crosslinked dispersion liquid) in which the magenta pigment was dispersed by the water-soluble resin Q-1. The pigment concentration of the magenta pigment in the non-crosslinked dispersion liquid was 15% by mass.

Trimethylolpropane polyglycidyl ether (product name, "Denacol EX-321", manufactured by Nagase ChemteX Corporation) (1.3 parts by mass) as a crosslinking agent and a boric acid aqueous solution (boric acid concentration: 4% by mass) (14.3 parts by mass) were added to this non-crosslinked dispersion liquid (136 parts by mass), and the solution was allowed to react at 50°C for 6 and a half hours and cooled to 25°C. As a result, the water-soluble resin Q-1 was crosslinked with the crosslinking agent.

As a result, a dispersion liquid (crosslinked dispersion liquid) where the magenta pigment was dispersed by the crosslinked resin 1 as the pigment dispersing resin was obtained. Here, the crosslinked resin 1 was a pigment dispersing resin where the water-soluble resin Q-1 was crosslinked with the above-described crosslinking agent.

Next, ion exchange water was added to the obtained crosslinked dispersion liquid, and ultrafiltration was performed using a stirring type ULTRAHOLDER (manufactured by Advantec AS) and an ultrafiltration filter (manufactured by Advantec AS, molecular weight cutoff of 50,000, Q0500076E ULTRAFILTER). A magenta pigment dispersion liquid (magenta pigment concentration of 15% by mass) in which the magenta pigment was dispersed by the crosslinked resin 1 was obtained by performing purification such that the concentration of dipropylene glycol in the crosslinked dispersion liquid was set to 0.1% by mass or less and performing concentration until the pigment concentration reached 15% by mass.

<Manufacturing of Aqueous Solution of Binder Resin P1 (Acrylic Water-Soluble Resin)

A reaction container provided with a gas introduction pipe, a thermometer, a condenser, and a stirrer was charged with 93.4 parts by mass of butanol, and the inside thereof was replaced with nitrogen gas. The inside of the reaction container was heated to 110°C, and a mixture of 8 parts by mass of methacrylic acid, 15 parts by mass of styrene, and 77 parts by mass of methyl methacrylate as polymerizable monomers and 9 parts by mass of V-601 (manufactured by FUJIFILM Wako Pure Chemical Corporation) as a polymerization initiator was added dropwise over 2 hours to perform a polymerization reaction. After completion of the dropwise addition, the reaction was further performed at 110°C for 3 hours, 0.9 parts by mass of V-601 (manufactured by FUJIFILM Wako Pure Chemical Corporation) was added, and the reaction was further continued at 110°C for 1 hour to obtain a binder resin 1 as an acrylic resin.

Next, the binder resin 1 was cooled to room temperature, 37.1 parts by mass of dimethylaminoethanol was added for neutralization, and 100 parts by mass of water was added to obtain an aqueous solution. The obtained solution was heated to 100°C or higher, butanol was azeotroped with water to distill off butanol, and the solid content was adjusted to 50% by mass. As a result, an aqueous solution of a binder resin P1 (solid content: 50% by mass) was obtained. Here, the binder resin P1 is an acrylic water-soluble resin (that is, an acrylic resin that is a water-soluble resin; hereinafter, the same applies) that is an aqueous solution of the binder resin 1.

Each of the acid value (A), the calculation Tg (T2), and the weight-average molecular weight (C) of the binder resin P1 is as shown in Table 1.

<Manufacturing of Aqueous Solution of Binder Resins P2 to P10 and P12 (Acrylic Water-Soluble Resin)>

The polymerizable monomers were changed to monomers at ratios shown in Tables 1 and 2, and the amount of the polymerization initiator V-601 was adjusted such that the weight-average molecular weight of each of the binder resins was satisfied. In addition, the amount of dimethylaminoethanol used for the neutralization was adjusted such that the degree of neutralization of the acrylic resin was 100%. Using the same method as that of the aqueous solution of the binder resin P1 except for the above-described procedure, an aqueous solution (solid content: 50% by mass) of each of binder resins P2 to P10 and P12 was obtained.

Each of the acid value (A), the calculation Tg (T2), and the weight-average molecular weight (C) of each of the binder resins P2 to P10 and P12 is as shown in Table 1.

<Preparation of Aqueous Dispersion Liquid of Binder Resin Particles P11>

As an aqueous dispersion liquid of binder resin particles P11, an aqueous dispersion liquid "QE-1042" (solid content: 40% by mass) of styrene-acrylic resin particles (manufactured by SEIKO PMC CORPORATION) was prepared.

Each of the acid value (A), the calculation Tg (T2), and the weight-average molecular weight (C) of the binder resin particles P11 is as shown in Table 2.
Regarding structural units and a component ratio in the binder resin particles P11, there are no data (N. D.).

[Examples 1 to 24 and Comparative Examples 1 and 3]

<Preparation of Magenta Ink>

The components shown in Tables 1 and 2 were mixed such that the contents (% by mass) of the components were as shown in Tables 1 and 2. Next, coarse particles were removed from the mixed solution using a 1 μm filter to prepare a magenta ink according to each of Examples and Comparative Examples.
The details of the components shown in Tables 1 and 2 are as follows.
The amount of each of the components in Tables 1 and 2 is the amount as a solid content.
The amounts of water and an organic solvent in a component of which the concentration of solid contents was not 100% by mass were included in the items of "Water" and "Organic Solvent".
In Tables 1 and 2, the blank denotes that the ink does not contain the corresponding component.

(Pigment Dispersion Liquid)

· Pigment dispersion liquid: the magenta pigment dispersion liquid prepared as described above (aqueous dispersion liquid having a pigment concentration of 15% by mass)

(Water-Soluble Organic Solvent)

· PG: propylene glycol (manufactured by ADEKA Corporation)
· 1,2-BDO: 1,2-butanediol (manufactured by Mitsubishi Chemical Group Corporation)
· DEGmEE: diethylene glycol ethyl ether (manufactured by Nippon Nyukazai Co., Ltd.)
· DEGiPrE: diethylene glycol isopropyl ether (manufactured by Nippon Nyukazai Co., Ltd.)

(Surfactant)

· TEGO Wet 280: polyether-modified silicone-based nonionic surfactant (manufactured by Evonik Industries AG)
· SURFYNOL 104: acetylene glycol-based nonionic surfactant (propylene glycol dispersion liquid having a concentration of solid contents of 50%, manufactured by Evonik Industries AG, trade name: SURFYNOL 104PG50)
· EMULGEN 120: polyoxyethylene lauryl ether, nonionic surfactant (manufactured by Kao Corporation)

(Wax)

· HITEC E-6314: aqueous dispersion liquid of polyethylene wax (aqueous dispersion liquid having a concentration of solid contents of 35% by mass, manufactured by Toho Chemical Industry Co., Ltd.)

<Ink Jet Recording>

An ink jet recording device having the same configuration as the ink jet recording device shown in Fig. 1 was prepared. As each of ink jet heads in the ink jet recording device, an ink jet recording line head "KJ4B-1200" (manufactured by KYOCERA Corporation) was used.
The magenta ink prepared as described above was jetted from one of the ink jet heads in the ink jet recording device and applied to a recording medium. While transporting the recording medium to which the ink was applied, the ink applied to the recording medium was heated and dried. As a result, ink jet recording was performed.
Detailed conditions of the ink jet recording are as follows.

<Conditions of Ink Jet Recording>

· Recording medium: product name "OK TOPCOAT", manufactured by Oji Paper Co., Ltd. (amount of water absorption: 4.9 $g/m^2$)
· Transport mechanism of recording medium: roll-to-roll
· Temperature of ink jet head: 32°C
· Resolution of ink jet head: 1200 × 1200 [dot per inch (dpi)]
· Jetting liquid droplet size of ink: 3.0 [pL]
· Environment around ink jet head: temperature 25°C ± 1°C, relative humidity 25°C ± 5%
· Transportation speed: 80 [m/min]
· Tension of recording medium during transport: 60 N
· Recorded image: solid image
· Heating method: a heating roller (the heating temperature was adjusted such that the temperature of the surface of the ink film was as shown in "Drying Temperature (T1) of Ink in Heating and Drying (°C)" in Tables 1 and 2), a heating drum (heating temperature: 120°C), and a hot air drying device (not illustrated, hot air temperature: 130 [°C], wind speed: 20 [m/s]) A plurality of dryers as the hot air drying device were disposed outside the heating rollers disposed in the arc shape. Using these dryers, hot air was blown to the ink-applied surface in the recording medium.
· Guide roller, heating roller, heating drum: prepared according to paragraphs 0063 to 0082 of JP2020-16355A

The following matters in the ink jet recording are as shown in Tables 1 and 2 below.

· Material of surface layer of guide roller
· Kinetic friction coefficient (B) of outer peripheral surface of guide roller
· Surface roughness Ra (nm) of guide roller
· Product (A × B) of acid value (A) of acrylic resin as binder resin and kinetic friction coefficient (B) of outer peripheral surface of guide roller
· A/T1 ratio that is ratio of acid value (A) of acrylic resin as binder resin to drying temperature (T1) (°C) of ink in heating and drying
· T2/B ratio that is ratio of calculation Tg (T2) (°C) of acrylic resin as binder resin to kinetic friction coefficient (B) of outer peripheral surface of guide roller
. (C/B ratio)/1000 that is value obtained by dividing C/B ratio by 1000, C/B ratio being ratio of weight-average molecular weight (C) of acrylic resin as binder resin to kinetic friction coefficient (B) of outer peripheral surface of guide roller
· |T1 - T2| that is absolute value of difference between drying temperature (T1) (°C) of ink in heating and drying and calculation Tg (T2) (°C) of acrylic resin as binder resin

<Evaluation of Jettability of Ink>

Using the ink jet recording device and the magenta ink, a nozzle check pattern as a solid image of Duty 100% was continuously recorded in a region of the recording medium corresponding to a length of 5000 m. The final region of the image recording portion corresponding to 10 m was cut, the number of missing nozzles in the nozzle check pattern was observed by visual inspection, and the jettability of the ink was evaluated based on the following evaluation standards.
In the following evaluation standards, the highest rank of the jettability of the ink is "A".

-Evaluation Standards for Jettability of Ink-

A: There were no missing nozzles.
B: The number of missing nozzles was 1 to 3.
C: The number of missing nozzles was 4 to 10.
D: The number of missing nozzles was 11 to 20.
E: The number of missing nozzles was 21 or more.

Here, "missing nozzles" refer to nozzles that did not jet the ink, which represents formation of white streaks.

<Evaluation of image Defects>

Using the ink jet recording device and the magenta ink, a solid image of Duty 100% was continuously recorded in a region of the recording medium corresponding to a length of 10 m. A sample of A4 size was cut from the image recording portion. The solid image in the cut sample was observed by visual inspection with a microscope. The observation range was the entire A4 size. Based on the observed result, image defects were evaluated according to the following evaluation standards.

In the following evaluation standards, the rank where image defects are most suppressed is A.

-Evaluation Standards of Image Defects-

A: Point defects did not occur in the microscopic observation.
B: The number of point defects that were not able to be observed by visual inspection but were able to be verified in the microscopic observation was 3 or less.
C: The number of point defects that were not able to be observed by visual inspection but were able to be verified in the microscopic observation was 10 or less.
D: The number of point defects that were able to be observed by visual inspection was more than 10, and the point defects partially occurred.
E: Point defects that were able to be observed by visual inspection occurred on the entire surface.

[Table 1]

| | | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|---|
| Ink (Amount of Each Component is % by mass) | Pigment Dispersion Liquid (Pigment Concentration: 15% by mass) | | | 21.4 | 21.4 | 21.4 | 21.4 | 21.4 | 21.4 | 21.4 | 21.4 | 21.4 | 21.4 | 21.4 | 21.4 | 21.4 | 21.4 |
| | Acrylic Resin as Binder Resin | Acrylic Resin No. | | P1 | P2 | P3 | P4 | P3 | P2 | P5 | P6 | P7 | P1 | P8 | P9 | P10 | P2 |
| | | Amount | | 5.0 | 5.0 | 5.0 | 5.0 | 5.0 | 5.0 | 5.0 | 5.0 | 5.0 | 5.0 | 5.0 | 5.0 | 5.0 | 5.0 |
| | | Form | | Water-Soluble | Water-Soluble | Water-Soluble | Water-Soluble | Water-Soluble | Water-Soluble | Water-SoluNe | Water-Soluble | Water-Soluble | Water-Soluble | Water-Soluble | Water-Soluble | Water-Soluble | Water-Soluble |
| | | Constitutional Unit and Component Ratio of Acrylic Resin | Methacrylic Acid | 8 | 4 | 6 | 9 | 6 | 4 | 3 | 10 | 12 | 8 | 4 | 4 | 4 | 4 |
| | | | Styrene | 15 | 19 | 19 | 19 | 19 | 19 | 25 | 25 | 25 | 15 | 26 | 26 | 26 | 19 |
| | | | Methyl Methacrylate | 77 | 77 | 75 | 72 | 75 | 77 | 72 | 65 | 63 | 77 | 60 | 45 | 30 | 77 |
| | | | 2-Ethylhexyl Acrylate | | | | | | | | | | | 10.0 | 25.0 | 40.0 | |
| | | Acid Value (A), mgKOH/g | | 52 | 26 | 39 | 60 | 39 | 26 | 21 | 65 | 78 | 52 | 26 | 26 | 26 | 26 |
| | | Glass Transition Temperature (T2), °C | | 111 | 108 | 110 | 113 | 110 | 108 | 108 | 115 | 115 | 111 | 77 | 40 | 9 | 108 |
| | | Weight-Average Molecular Weight (C) | | 15000 | 15000 | 15000 | 15000 | 15000 | 15000 | 15000 | 15000 | 15000 | 15000 | 15000 | 15000 | 15000 | 15000 |
| | Water-Soluble Organic Solvent | PG | | 15.0 | 15.0 | 15.0 | 15.0 | 15.0 | 15.0 | 15.0 | 15.0 | 15.0 | 15.0 | 15.0 | 15.0 | 15.0 | 15.0 |
| | | 1,2-BDO | | 5.0 | 5.0 | 5.0 | 5.0 | 5.0 | 5.0 | 5.0 | 5.0 | 5.0 | 5.0 | 5.0 | 5.0 | 5.0 | 5.0 |
| | | DEGmEE | | 3.0 | 3.0 | 3.0 | 3.0 | 3.0 | 3.0 | 3.0 | 3.0 | 3.0 | 3.0 | 3.0 | 3.0 | 3.0 | 3.0 |
| | | DEGiPrE | | 3.0 | 3.0 | 3.0 | 3.0 | 3.0 | 3.0 | 3.0 | 3.0 | 3.0 | 3.0 | 3.0 | 3.0 | 3.0 | 3.0 |

(continued)

| | | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|---|
| | Surfactant | Silicone-Based Surfactant | TEGOWet280 | 0.3 | 0.3 | 0.3 | 0.3 | 0.3 | 0.3 | 0.3 | 0.3 | 0.3 | 0.3 | 0.3 | 0.3 | 0.3 | 0.3 |
| | | Other Surfactant | SURFYNOL 104 | 0.5 | 0.5 | 0.5 | 0.5 | 0.5 | 0.5 | 0.5 | 0.5 | 0.5 | 0.5 | 0.5 | 0.5 | 0.5 | 0.5 |
| | | | EMULGEN 120 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Other Component | Wax | HITEC E-6314 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Water | | | Remainder | Remainder | Remainder | Remainder | Remainder | Remainder | Remainder | Remainder | Remainder | Remainder | Remainder | Remainder | Remainder | Remainder |
| Guide Roller | Material of Surface Layer of Guide Roller | | | PTFE | PTFE | PTFE | PTFE | PFA | FEP | ETFE | PTFE | PTFE | PTFE | PTFE | PTFE | PTFE | PE |
| | Kinetic Friction Coefficient of Guide Roller Surface (B) | | | 0.05 | 0.05 | 0.05 | 0.05 | 0.08 | 0.08 | 0.22 | 0.05 | 0.05 | 0.05 | 0.05 | 0.05 | 0.05 | 0.13 |
| | Surface Roughness Ra of Guide Roller (nm) | | | 5 | 5 | 5 | 5 | 5 | 5 | 5 | 5 | 5 | 5 | 5 | 5 | 5 | 5 |
| Drying Temperature of Ink in Heating and Drying (T1) (°C) | | | | 120 | 120 | 120 | 120 | 120 | 120 | 120 | 120 | 120 | 100 | 120 | 120 | 120 | 120 |
| Product (A x B) | | | | 2.6 | 1.3 | 2.0 | 3.0 | 2.3 | 2.1 | 4.6 | 3.3 | 3.9 | 2.6 | 1.3 | 1.3 | 1.3 | 3.4 |
| A/T1 Ratio | | | | 0.43 | 0.22 | 0.33 | 0.50 | 0.33 | 0.22 | 0.18 | 0.54 | 0.65 | 0.52 | 0.22 | 0.22 | 0.22 | 0.22 |
| T2/B Ratio | | | | 2220 | 2160 | 2200 | 2260 | 1833 | 1350 | 491 | 2300 | 2300 | 2220 | 1540 | 800 | 180 | 831 |
| (C/B Ratio)/1000 | | | | 300 | 300 | 300 | 300 | 250 | 188 | 68 | 300 | 300 | 300 | 300 | 300 | 300 | 115 |
| \|T1 - T2\| | | | | 9 | 12 | 10 | 7 | 10 | 12 | 12 | 5 | 5 | 11 | 43 | 80 | 111 | 12 |
| Evaluation Result | Jettability | | | A | B | A | A | A | B | B | A | A | A | B | 8 | B | B |
| | Image Defects | | | A | A | A | A | A | A | B | B | C | B | A | C | C | B |

[Table 2]

| | | | Example 15 | Example 16 | Example 17 | Example 18 | Example 19 | Example 20 | Example 21 | Example 22 | Example 23 | Example 24 | Comparative Example 1 | Comparative Example 2 | Comparative Example 3 |
|---|---|---|---|---|---|---|---|---|---|---|---|---|---|---|---|
| Ink (Amount of Each Component is % by mass) | Pigment Dispersion Liquid (Pigment Concentration 15%) | | 21.4 | 21.4 | 21.4 | 21.4 | 21.4 | 21.4 | 21.4 | 21.4 | 21.4 | 21.4 | 21.4 | 21.4 | 21.4 |
| | Acrylic Resin as Binder Resin | Resin No. | P1 | P1 | P1 | P1 | P8 | P1 | P9 | P10 | P11 | P1 | P8 | P1 | P12 |
| | | Amount | 5.0 | 5.0 | 5.0 | 5.0 | 5.0 | 5.0 | 5.0 | 5.0 | 5.0 | 5.0 | 5.0 | 5.0 | 5.0 |
| | | Form | Water-Soluble | Water-Soluble | Water-Soluble | Water-Soluble | Water-Soluble | Water-Soluble | Water-Soluble | Water-Soluble | Particles | Water-Soluble | Water-Soluble | Water-Soluble | Water-Soluble |
| | | Constitutional Unit and Component Ratio of Acrylic Resin: Methacrylic Acid | 8 | 8 | 8 | 8 | 4 | 8 | 8 | 8 | | 8 | 4 | 8 | 2 |
| | | Constitutional Unit and Component Ratio of Acrylic Resin: Styrene | 15 | 15 | 15 | 15 | 26 | 15 | 15 | 15 | | 15 | 26 | 15 | 33 |
| | | Constitutional Unit and Component Ratio of Acrylic Resin: Methyl Methacrylate | 77 | 77 | 77 | 77 | 60 | 77 | 77 | 77 | N.D. | 77 | 60 | 77 | 65 |
| | | Constitutional Unit and Component Ratio of Acrylic Resin: 2-Ethylhexyl Acrylate | | | | | 10.0 | | | | | | 10.0 | | |
| | | Acid Value (A), mgKOH/g | 52 | 52 | 52 | 52 | 26 | 52 | 52 | 52 | 33 | 52 | 26 | 52 | 13 |
| | | Glass Transition Temperature (T2), °C | 111 | 111 | 111 | 111 | 77 | 111 | 111 | 111 | 53 | 111 | 77 | 111 | 105 |
| | | Weight-Average Molecular Weight (C) | 7000 | 4000 | 7000 | 15000 | 15000 | 15000 | 120000 | 300000 | 120000 | 15000 | 15000 | 15000 | 15000 |
| | Water-Soluble Organic Solvent | PG | 15.0 | 15.0 | 15.0 | 15.0 | 15.0 | 150 | 15.0 | 15.0 | 15.0 | 15.0 | 15.0 | 15.0 | 15.0 |
| | | 1,2-BDO | 5.0 | 5.0 | 5.0 | 5.0 | 5.0 | 5.0 | 5.0 | 5.0 | 5.0 | 5.0 | 5.0 | 5.0 | 50 |
| | | DEGmEE | 3.0 | 3.0 | 3.0 | 3.0 | 3.0 | 3.0 | 3.0 | 3.0 | 3.0 | 3.0 | 3.0 | 3.0 | 3.0 |
| | | DEGiPrE | 3.0 | 3.0 | 3.0 | 3.0 | 3.0 | 3.0 | 3.0 | 3.0 | 3.0 | 3.0 | 3.0 | 3.0 | 3.0 |

(continued)

| | | | | Example 15 | Example 16 | Example 17 | Example 18 | Example 19 | Example 20 | Example 21 | Example 22 | Example 23 | Example 24 | Comparative Example 1 | Comparative Example 2 | Comparative Example 3 |
|---|---|---|---|---|---|---|---|---|---|---|---|---|---|---|---|---|
| | Surfactant | Silicone-Based | TEGO-Wet280 | 0.3 | 0.3 | 0.3 | 0.3 | 0.3 | 0.3 | 0.3 | 0.3 | 0.3 | | 0.3 | 0.3 | 0.3 |
| | | Other Surfactant | SURFYNOL 104 | 0.5 | 0.5 | 0.5 | 0.5 | 0.5 | 0.5 | 0.5 | 0.5 | 0.5 | 0.5 | 0.5 | 0.5 | 0.5 |
| | | | EMULGEN 120 | 1.0 | 1.0 | 1.0 | 1.0 | 1.0 | 1.0 | 1.0 | 1.0 | 1.0 | 1.0 | 1.0 | 1.0 | 1.0 |
| | Other Component | Wax | HITEC E-6314 | 1.0 | 1.0 | 1.0 | 1.0 | 1.0 | 1.0 | 1.0 | 1.0 | 1.0 | 1.0 | 1.0 | 1.0 | 1.0 |
| | Water | | | Remainder | Remainder | Remainder | Remainder | Remainder | Remainder | Remainder | Remainder | Remainder | Remainder | Remainder | Remainder | Remainder |
| Guide Roller | Material of Surface of Guide Roller | | | PTFE | PTFE | FEP | PTFE | PTFE | PTFE | PTFE | PTFE | PTFE | PTFE | ETFE | PC | PTFE |
| | Kinetic Friction Coefficient of Guide Roller Surface (B) | | | 0.05 | 0.05 | 0.08 | 0.05 | 0.05 | 0.05 | 0.05 | 0.05 | 0.05 | 0.05 | 0.22 | 0.45 | 0.05 |
| | Surface Roughness Ra of Guide Roller (nm) | | | 5 | 5 | 5 | 5 | 5 | 15 | 5 | 5 | 5 | 5 | 5 | 5 | 5 |
| Drying Temperature of ink in Heating and Drying (T1) (°C) | | | | 120 | 120 | 120 | 140 | 140 | 120 | 120 | 120 | 110 | 120 | 120 | 120 | 120 |
| Product (A x B) | | | | 2.6 | 2.6 | 4.2 | 2.6 | 1.3 | 2.6 | 2.6 | 2.6 | 1.7 | 2.6 | 5.7 | 23.4 | 0.7 |
| AT1 Ratio | | | | 0.43 | 0.43 | 0.43 | 0.37 | 019 | 0.43 | 0.43 | 0.43 | 0.30 | 0.43 | 0.22 | 0.43 | 0.11 |
| T2/B Ratio | | | | 2220 | 2220 | 1388 | 2220 | 1540 | 2220 | 2220 | 2220 | 1060 | 2220 | 350 | 247 | 2100 |
| (C/B Ratio)/1000 | | | | 140 | 80 | 88 | 300 | 300 | 300 | 2400 | 5000 | 2400 | 300 | 68 | 33 | 300 |
| \|T1 - T2\| | | | | 9 | 9 | 9 | 29 | 63 | 9 | 9 | 9 | 57 | 9 | 43 | 9 | 15 |
| Evaluation Result | Jettability | | | A | A | A | A | B | A | A | B | B | A | B | A | E |
| | Image Defects | | | A | B | B | A | B | B | A | A | A | B | D | E | A |

As shown in Tables 1 and 2, in Examples 1 to 24 where the product (A $\times$ B) of the acid value (A) of the acrylic resin as the binder resin and the kinetic friction coefficient (B) of the outer peripheral surface of the guide roller was 1.0 to 5.0, image defects were suppressed, and a decrease in the jettability of the ink was suppressed.

On the other hand, in Comparative Example 3 where the product (A $\times$ B) was less than 1.0, the jettability of the ink decreased.

In addition, in Comparative Examples 1 and 2 where the product (A $\times$ B) was more than 5.0, image defects were significant.

It can be seen from the results of Examples 1 and 10 that, in a case where the A/T1 ratio that is the ratio of the acid value (A) of the acrylic resin to the drying temperature T1 (°C) of the ink in the heating and drying is 0.50 or less (Example 1), image defects are further suppressed.

It can be seen from the results of Examples 11 to 13 that, in a case where the T2/B ratio that is the ratio of the glass transition temperature (T2) of the acrylic resin to the kinetic friction coefficient (B) of the outer peripheral surface of the guide roller is 1000 or more (Example 11), image defects are further suppressed.

It can be seen from the results of Examples 15 and 16 that, in a case where (C/B ratio)/1000 that is obtained by dividing the ratio of the weight-average molecular weight (C) of the acrylic resin to the kinetic friction coefficient (B) of the outer peripheral surface of the guide roller by 1000 is 100 or more (Example 15), image defects are further suppressed.

It can be seen from the results of Examples 18 and 19 that, in a case where |T2 - T1| that is the absolute value of the difference between the glass transition temperature (T2) of the acrylic resin and the drying temperature (T1) of the ink in the heating and drying is 60 or less (Example 18), image defects are further suppressed.

It can be seen from the results of Examples 2 and 14 that, in a case where the guide roller includes the surface layer containing a fluororesin (Example 2), image defects are further suppressed.

It can be seen from the results of Examples 2, 6, 7, and 14 that, in a case where the kinetic friction coefficient of the outer peripheral surface of the guide roller is 0.03 to 0.08 (Examples 2 and 6), image defects are further suppressed.

It can be seen from the results of Examples 1 and 20 that, in a case where the surface roughness Ra of the outer peripheral surface of the guide roller is 2 $\mu$m to 8 $\mu$m (Example 1), image defects are further suppressed.

It can be seen from the results of Examples 11 to 13 that, in a case where the glass transition temperature of the acrylic resin is 50°C or higher (Example 11), image defects are further suppressed.

It can be seen from the results of Examples 21 and 22 that, in a case where the weight-average molecular weight of the acrylic resin is 5000 to 150000 (Example 21), the jettability of the ink is further improved.

It can be seen from the results of Examples 21 and 23 that, in a case where the acrylic resin is a water-soluble resin (Example 21), the jettability of the ink is further improved.

It can be seen from the results of Examples 1 and 24 that, in a case where the ink contains a silicone-based surfactant (Example 1), image defects are further suppressed.

The disclosure of Japanese Patent Application No. 2022-189591 filed on November 28, 2022 is incorporated herein in its entirety.

All documents, patent applications, and technical standards described in the present specification are herein incorporated by reference to the same extent that each individual document, patent application, or technical standard was specifically and individually indicated to be incorporated by reference.

## Claims

**1.** An ink jet recording method, comprising:

applying ink to a recording medium using an ink jet method; and
heating and drying the ink applied to the recording medium while transporting the recording medium to which the ink is applied,
wherein the heating and drying is performed using a heating drying device comprising

a heating roller configured to come into contact with an ink non-applied surface in the recording medium to which the ink is applied and to heat the ink applied to the recording medium through the recording medium and
a guide roller configured to come into contact with an ink-applied surface in the recording medium to which the ink is applied and to guide the recording medium to which the ink is applied,

the ink comprises water, a pigment, a pigment dispersing resin, and an acrylic resin as a binder resin, and
in a case where an acid value of the acrylic resin in units of mgKOH/g is represented by A and a kinetic friction coefficient of an outer peripheral surface of the guide roller is represented by B, a product of A and B is 1.0 to 5.0.

**2.** The ink jet recording method according to claim 1,
wherein the acid value of the acrylic resin is 20 mgKOH/g to 80 mgKOH/g.

**3.** The ink jet recording method according to claim 1,
wherein in a case where the acid value of the acrylic resin in units of mgKOH/g is represented by A and a drying temperature of the ink in the heating and drying in units of °C is represented by T1, an A/T1 ratio is 0.50 or less.

**4.** The ink jet recording method according to claim 1,
wherein in a case where a glass transition temperature of the acrylic resin in units of °C is represented by T2 and the kinetic friction coefficient of the outer peripheral surface of the guide roller is represented by B, a T2/B ratio is 1000 or more.

**5.** The ink jet recording method according to claim 1,
wherein in a case where a weight-average molecular weight of the acrylic resin is represented by C and the kinetic friction coefficient of the outer peripheral surface of the guide roller is represented by B, a value obtained by dividing a C/B ratio by 1000 is 100 or more.

**6.** The ink jet recording method according to claim 1,
wherein in a case where a glass transition temperature of the acrylic resin in units of °C is represented by T2 and a drying temperature of the ink in the heating and drying in units of °C is represented by T1, an absolute value of a difference between T2 and T1 is 60 or less.

**7.** The ink jet recording method according to claim 1,
wherein the guide roller comprises a surface layer comprising a fluororesin.

**8.** The ink jet recording method according to claim 1,
wherein the kinetic friction coefficient of the outer peripheral surface of the guide roller is 0.03 to 0.08.

**9.** The ink jet recording method according to claim 1,
wherein an arithmetic average roughness Ra of the outer peripheral surface of the guide roller defined according to JIS B0601:2013 is 2 μm to 8 μm.

**10.** The ink jet recording method according to claim 1,
wherein a glass transition temperature of the acrylic resin in units of °C is 50°C or higher.

**11.** The ink jet recording method according to claim 1,
wherein a weight-average molecular weight of the acrylic resin is 5000 to 150000.

**12.** The ink jet recording method according to claim 1,
wherein the acrylic resin comprises a structural unit derived from styrene.

**13.** The ink jet recording method according to claim 1,
wherein the acrylic resin is a water-soluble resin.

**14.** The ink jet recording method according to claim 1,
wherein the ink further comprises a silicone-based surfactant.

**15.** The ink jet recording method according to claim 1,

wherein the heating drying device comprises
a plurality of heating rollers, and
further comprises, as a transport path through which the recording medium to which the ink is applied is transported,

a first transport path through which the recording medium to which the ink is applied is transported while being in contact with the plurality of heating rollers, and
a second transport path through which the recording medium having passed through the first transport path is transported while being guided by the guide roller to be in contact again with at least one of the plurality of

heating rollers in contact with the first transport path.

**16.** An ink jet recording device used for the ink jet recording method according to any one of claims 1 to 15, the ink jet recording device comprising:

an ink jet head configured to apply the ink to the recording medium; and
the heating drying device.

FIG. 1

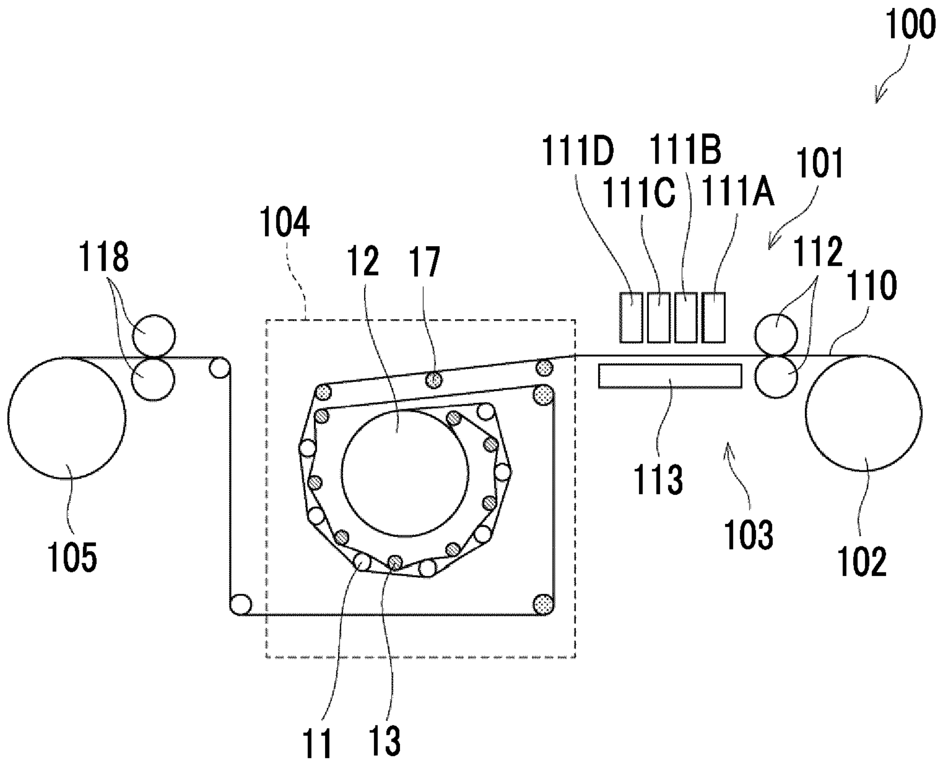
100
111D
111B
111C
111A
101
104
118
12
17
112
110
113
103
105
102
11
13

FIG. 2

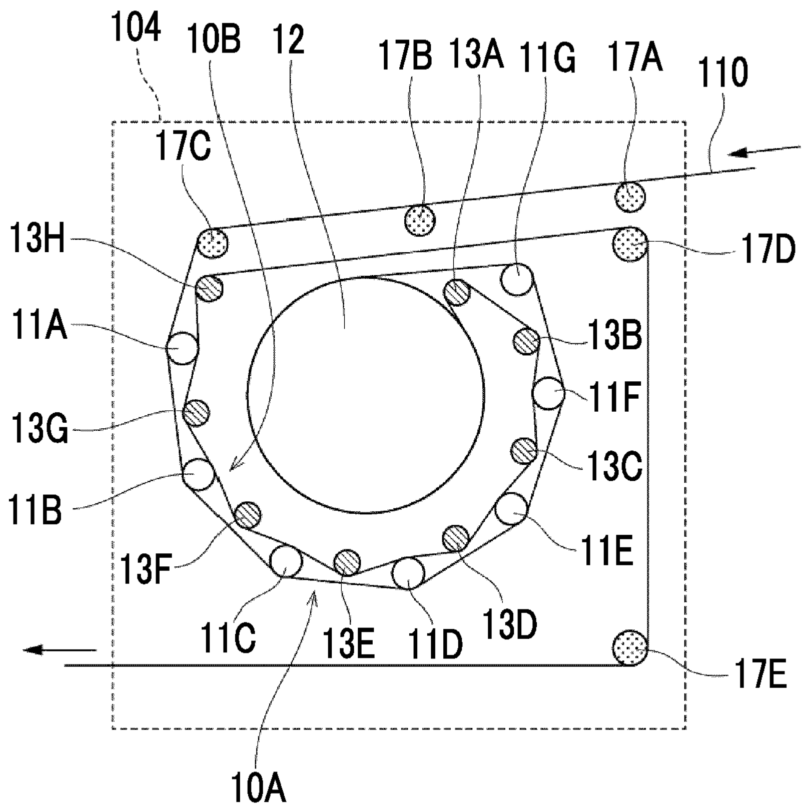
104
10B
12
17B
13A
11G
17A
110
17C
13H
17D
11A
13B
11F
13G
13C
11B
11E
13F
11C
13E
11D
13D
17E
10A

## INTERNATIONAL SEARCH REPORT

International application No.
**PCT/JP2023/042418**

**A. CLASSIFICATION OF SUBJECT MATTER**

***B41M 5/00***(2006.01)i; ***B41J 2/01***(2006.01)i; ***C09D 11/322***(2014.01)i
FI: B41M5/00 100; B41M5/00 120; B41J2/01 125; B41J2/01 305; C09D11/322

According to International Patent Classification (IPC) or to both national classification and IPC

**B. FIELDS SEARCHED**

Minimum documentation searched (classification system followed by classification symbols)

B41M5/00; B41J2/01; C09D11/322

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-024508 A (KONICA MINOLTA INC) 05 February 2015 (2015-02-05)<br>entire text, all drawings | 1-16 |
| A | JP 2012-246435 A (KONICA MINOLTA IJ TECHNOLOGIES INC) 13 December 2012 (2012-12-13)<br>entire text, all drawings | 1-16 |
| A | JP 8-337050 A (SEIKO EPSON CORP) 24 December 1996 (1996-12-24)<br>entire text, all drawings | 1-16 |
| A | JP 2003-182233 A (FUJI PHOTO FILM CO LTD) 03 July 2003 (2003-07-03)<br>entire text, all drawings | 1-16 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/042418**

| Patent document cited in search report | Publication date (day/month/year) | Patent family member(s) | Publication date (day/month/year) |
|---|---|---|---|
| JP 2015-024508 A | 05 February 2015 | (Family: none) | |
| JP 2012-246435 A | 13 December 2012 | US 2012/0306964 A1<br>whole document | |
| JP 8-337050 A | 24 December 1996 | US 5928787 A<br>entire text, all drawings | |
| JP 2003-182233 A | 03 July 2003 | US 2006/0046933 A1<br>whole document | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020016355 A
- JP 2022037537 A
- JP 2002012607 A
- JP 2002188025 A
- JP 2003026978 A
- JP 2003342503 A
- JP 2022189591 A

### Non-patent literature cited in the description

- Industrial Organic Pigments. **W. HERBST** ; **K. HUNGER**. Encyclopedia of Pigments. 2000
- **J. BRANDRUP** ; **E. H. IMMERGUT**. Polymer Handbook. Wiley-Interscience, 1989
- **TAKEHIKO FUJIMOTO**. Introduction of New Surfactants. Sanyo Chemical Industries, Ltd., 1992, 94-107